Europäisches Patentamt

European Patent Office

Office européen des brevets

(11) Publication number: **0 235 070**
**A2**

(12) # EUROPEAN PATENT APPLICATION

(21) Application number: **87600003.5**

(22) Date of filing: **17.02.87**

(51) Int. Cl.³: **F 02 M 27/04**

(30) Priority: **19.02.86 GR 860473**

(43) Date of publication of application:
**02.09.87 Bulletin 87/36**

(84) Designated Contracting States:
**AT BE CH DE ES FR GB IT LI LU NL SE**

(71) Applicant: **Varelas, Ioannis**
**Kiourkatiotou An.19**
**GR-136 71 Acharnes Attikis(GR)**

(72) Inventor: **Varelas, Ioannis**
**Kiourkatiotou An.19**
**GR-136 71 Acharnes Attikis(GR)**

(54) Method for the disintegration of liquids and stable compounds, device for effecting the same and application of the method in the improvement of combustion in internal or external combustion engines.

(57) The present invention relates to a method and device for the disintegration of liquids and stable compounds. The proposed method comprises feeding the liquids and/or stable compounds at a minimum pressure of 3.9 p.s.i. into a steady, existing magnetic field, which has a preferred active length of 13.3 or 13.5 or 14.2 or 14.4 or any other suitable and in accordance with the laws of numeration value of length, where the abovementioned magnetic field is preferably materialized with a device, comprising a housing, where a series of magnets shaped in the form of the said housing are arranged in series within the same, where the magnets are interfaced by means of thin, annular diaphragms or spacers, which by way of example are balls of a suitable diameter, where the entire structure is in full accordance to the laws of numeration and the manufacturing requirements of each particular embodiment of the device.

Mention is made to a preferred, illustrative embodiment of the invention in the field of internal or external combustion engines, whereby the combustion is substantially improved after the liquids fed to the combustion chamber have passed through the device for the disintegration of liquids and stable compounds of the invention and the quantity of the supplied combustion liquids is reduced by way of addition of a suitable rubber washer, with dimensions in accordance to the laws of numeration, around the so called "dish" of the acceleration membrane, by way of example in the internal combustion engine of a motor-car, this resulting in the reduction of the vibrations of the "dish" and therefore of the quantity of liquids which are fed into the combustion chamber.

fig 2

"Method for the disintegration of liquids and stable compounds, device for effecting the same and application of the method in the improvement of combustion in internal or external combustion engines".

## THE BACKGROUND OF THE INVENTION

---

The prior art has not to my knowledge invented a similar method and device. Thus, up today, the disintegration of liquids and stable compounds is carried out by means of advanced technology, highly complicated apparatuses, which are thus unsuitable in everyday practice.

By way of example, in the field of combustion of liquids in internal or external combustion engines, it is well known that a great part of losses of the calorific power of the combustion liquids is on the one hand due to their imperfect processing and on the other hand it is due to imperfect adjustment to achieve complete combustion of the liquids fed into the combustion chamber.

Thus, it is a main object of the present invention to provide a method for the disintegration of liquids and stable compounds and a device for effecting this method, particularly applicable in the processing of the liquids fed for combustion in internal or external combustion engines.

Another object of the present invention is to intervene in the process of supplying the combustion liquids and in particular prior to their introduction in the combustion cylinders of an internal or external combustion engine, so as to effect a full combustion of these liquids and therefore obtain the maximum of their calorific power.

The realisation of the objects of the present invention offers various, substantial advantages as follows:

a. The disintegration of any kind of liquid or stable compound can be effected in a simple and economical, highly reliable a device of high precision designed so as to conform with the requirements of each particular branch of application, such as for example in several industrial branches, industrial and laboratory Chemistry, automobiles and vehicles moving on the earth, sea, air or outer space, domestic usage, machines of any kind in any branch of application, heating and air-conditioning media, etc.

b. The combustion of the liquids fed to the cylinders of internal or external combustion engines is carried out with substantial economy of the combustion liquids, variable in a field of values from 20-45% with a forecasted, most probable percentage of 38%. This results in a substuntial reduction of the atmospheric pollution, since on the one hand less is the quantity of liquids burned to produce the same work and on the other hand the combustion of these liquids is perfect. An increase of the horsepower of the engine of the minimum order of 11,9% is also achieved, as well as reduction of noise because of the smoother operation of the engine, which finally results to its longer life period and less maintenance requirements. ,

These and other objects, characteristics and advantages of the proposed method and device are made apparent in the following analytical description of the invention.

## BRIEF DESCRIPTION OF THE DRAWINGS

-----------------------------------

The present invention will be made most fully understood to those skilled in the art by reference to the accompanying drawings, which show in an illustrative manner, an andicative, embodiment of the present invention.

Figure 1 shows a perspective view of the proposed device, which has been made in accordance to the method for the disintegration of liquids and stable compounds of the present invention.

Figure 2 presents a cross-sectional partial view of the device shown in Fig. 1.

Figure 3 presents a perspective view of the acceleration membrane mounted at a vehicles carburettor, whereby in order to obtain improved combustion, the metallic "dish" of the acceleration membrane is covered by an additional washer of a larger diameter.

Figure 4 presents a perspective view of an illustrative type of magnet and diaphragm used in the invented device.


## ANALYTICAL DESCRIPTION OF THE INVENTION

-------------------------------------------


The invented methodisbasedontheprinciples of numeration, which will be briefly outlined below:

a. We are based on the right basis of numeration, which provides for the Laws of Nature, whereby 2.999 = 29 = 2+9+9+9, 314 and 26.6 and 36, i.e. 13.3=7 or 13.5=9 or 14.2=7 or 14.4=9.

b. The numbers 1,3,5,7,9 are the active numbers and the numbers 2,4,6,8 are passive numbers. The number 0 is not taken into account. Thus, both No. 7 and No. 9 are simply two good numbers, whereas No. 11 or No. 19 are very good numbers. And No. 29 is the best among all other numbers.

c. Negative (or bad) numbers.

No. 16 is negative number, but nevertheless No. 16=7.

No. 18 is also bad number, but nevertheless No. 18=9.

d. No. 7 and No. 9, if multiplied by or added to, etc. any other number, it will always result to No. 7 or No. 9 and it will never result to a higher number.  In the same manner, as we will see below the work E is maintained constant and it never becomes higher.  For example:

$9 \times 2 = 18 = 9 \times$ distance $(65) = 9$

$9 \times 3 = 27 = 9 \times$ " $(19) = 9$

$9 \times 6 = 54 = 9 \times$ " $(29) = 9$

$9 \times 7 = 63 = 9 \times$ " $(28) = 9 \times 64 = 9$

whereby the word distance is meant to define the transfer of work from the exit of the device as will be explained below.

e. Nos. 11 and 19 can become:

No. $11 = 1123 \times 8 = 8984 = 29 \times$ distance $(65) = 9$

$\times$ " $(29) = 5$

$\times$ " $(19) = 7 \times 64 = 11$

No. $19 = 199 \times 10 = 1990 = 19 \times$ distance $(65) = 2$

$\times$ " $(29) = 2$

$\times$ " $(19) = 19$

$\times$ " $(28) = 19 \times 64 = 19$

f. No. 29 can become:

$29 = 2999 \times 10 = 29990 = 29 \times$ distance $(65) = 4$

$\times$ " $(29) = 4$

$\times$ " $(19) = 29$

$\times$ " $(59) = 28$

$\times$ " $(58) = 26$

29=2999x10=29990=29 x distance(56)=31

$$x \quad " \quad (28)=29 \text{ x distance}(10)=29$$

$$x \quad " \quad (64)=29$$

g. 2999 in the same way.

3989=29=3989 x 10 = 39890 = 29

4988=29=4988 x 5  = 24940 = 19

4988=29=4988 x 10 = 49880 = 29

5888=29=5888 x 10 = 29440 = 19

5888=29=5888 x 10 = 58880 = 29

6878=29=6878 x 5  = 34390 = 19

6878=29=6878 x 10 = 68780 = 29

7877=29=7877 x 10 = 78770 = 29

1123=7 =1123 x 8  = 8984  = 29

9875=29=9875 x 10 = 98750 = 29

h.Differences are naturally encountered between the thoery and practice of numeration. By way of example, No. 29 is the best number in the theory of Numeration, but in practice, depending on the aims sought, it is possible that other numbers, such as for example No. 7 and 9 or 27 are made better. In the case of the present invention, the selection of the best possible numbers depends of the kind of liquids, whose disintegration, we wish to obtain.

Based on the abovementioned general principles of Numeration, an illustrative, preffered embodiment of the invented device for the disintegration of liquids and stable compounds will be descibed now and in particular, refence will be made to an application of the device and method for the improvement of combustion in internal or external combustion engines.

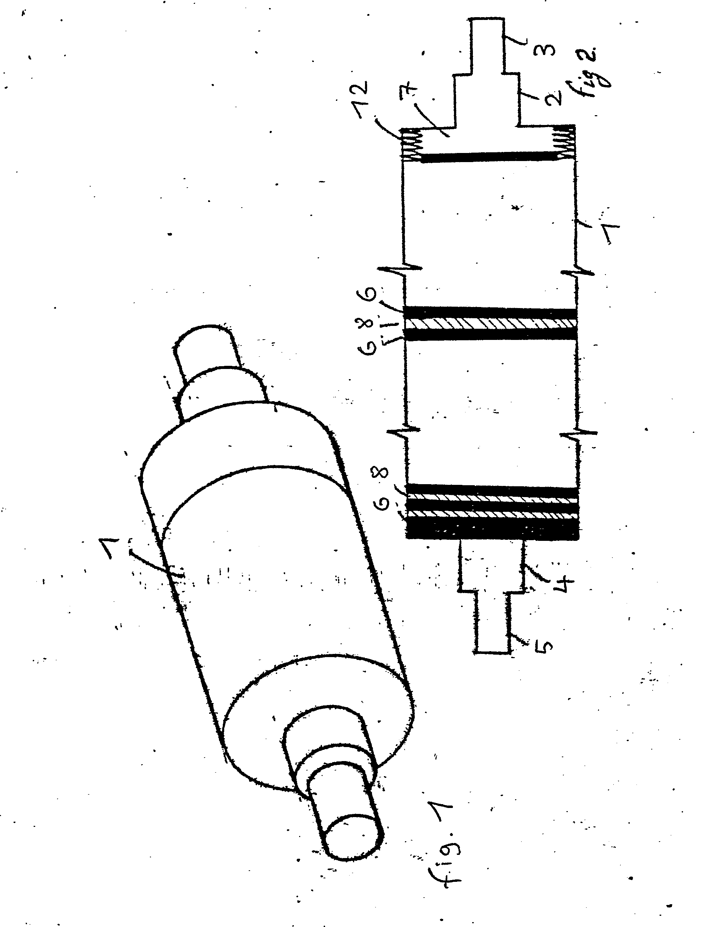

As illustrated in Figure 1, the device comprises an external housing 1, which has a cylindrical shape, but it can, be constructed in any other desirable shape and form, such as for example parallelogram, triangular, ellipsoidal lengthwise or heightwise, etc.

The device can be made from any material with good or bad conductivity, and it is preferably made from cast iron because of its low cost.

In each particular case, always based on the principles of nymeration, several magnetic fields can be created in the interior of the housing 1, where these magnetic iields can be good, better or very good and powerful.

The abovementioned magnetic fields can either be electromagnetic or natural (mineral), or manufactured by natural or artificial molecules, artificial or natural magnets of whatever desired width, length or height.

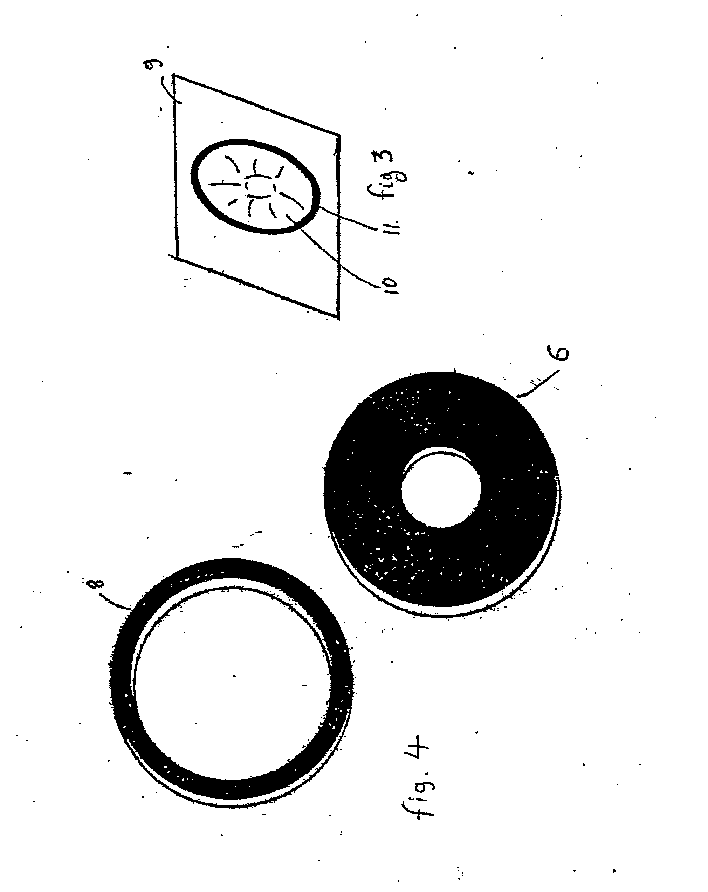

In accordance with the illustrative embodiment of the invention depicted in the drawings, isotropic or anisotropic magnets can be employed which can by way of example be ceramic cobalt or nickel with the maximum possible magnetic power, measured in GAUSS. An illustrative form of the employed magnet is indicated by number 6 in the acompanying Figure 3.

-10-

A preffered embodiment of the invention and in particular a device of economy and impovement of the combustion of the liquids fed into the combustion chamber of internal or external combustion engines, will now be described below, where it must, be noted that any reference made to dimensions, materials of construction, etc., is merely illustrative.

The proposed device comprises a cylindrical housing made from iron with an external diameter of 50mm and an internal diameter of 45.5mm.

The device is connected between the fuel pump and the carburettor of an internal combustion engine, such as for example between the fuel pump and the carburettor of a motor car, or in diesel engines the device is prefferably mounted following the fuel pump. In order to facilitate the connection of the device in any type of petrol engine, the device is provided with a double diametered connection tube 2 and 3 at the entrance, as well as with a double diametered connection tube 4 and 5 at the outlet, whereat there are connected rubber tubes of corresponding diameter which are connected to the fuel pump and the carburettor inlet respectively, where in order to fill the device, the inlet diameter is always greater than the outlet diameter of the device. In the case of a diesel engine a single tube with a diameter of 8mm is used.

A free space with length of the order of 50mm is provided

at the entrance of the device, as illustrated in Figs. 1 and 2 this space being indicated by number 7, which functions as a strorage space for the liquids fed into the disintegration chamber, where such liquids include petrol, light or heavy diesel and water which produces Hydrogen (H2) and Oxygen (O), following usage of a suitable seperator apparatus where at the work pro-

duced being fed therein. The device of the invention works so as to effect the disintegration of hydrocarbons via the spectrum lines of each independent processed liquid, the whole process depending on the hysteresis of each megnetic field of the device, e.g. cracking reactor.

A series of diaphragms, indicated by No. 8 in the drawings and magnets, indicated by No. 6 are mounted in the interior of the housing of the device. Each diaphragm has the form of a ring of thickness of 2.999mm, i.e. 3mm but one micron. Each diaphragm can be made from any material, good or bad conductor, and preferably iron. The material of construction of the diaphragm must be cut exactly at the dimensions which are required in order to obtain the most suitable magnetic field.

In accordance with a first illustrative embodiment of the invention twelve magnets are provided between an inlet and an outlet diaphragm of the device, the magnets having a total length of 12.7cm. This length of magnets (12.7cm) when multiplied by the thickness of the diaphragm provides us with a magnetic field coefficient of 38,087.3=29

-12-

A first storage space for the liquids supplied for the disintegration process is always, as above mentioned, provided at the entrance of the device, this space being indicated by number 7 and immediately following this space and before the series of magnets 6 and diaphragms 8, a first magnet is provided which is maintained in place by means of a spring 12 as shown in Figure 2.

It must be noted that the work produced must be transferred exactly in to the point where it is going to be used, at a suitably numbered distance otherwise the work produced will return back to its initial condition.

In accordance with an illustrative embodiment of the invention, the work produced is carried at a distance of 64cm, and thus we have: $2999 \times 12.7 = 38087.3 = 29 \times$ distance$(64) = 24375887.2 = 11$, which is a very good number.

In accordance with a first alternative, illustrative embodiment of the invention the work produced is ca ried at a distance of 46cm, and thus we have:

$2999 \times 12.7 = 38087.3 = 29 \times$ distance $(46) = 1752015.8 = 29$

In accordance to a second alternative illustrative embodiment of the invention, eleven magnets are employed one or nine diaphragms and providing for the free storage space at the entrance of the divece.

In accordance to a third illustrative embodiment of the invention, 19 magnets are used whose length is 199mm, i.e. we have:

2999 x 19 = 29 x distance (100) = 29

In accordance to a fifth alternative embodiment of the invention 27 magnets are used, interfaced or not by suitable diaphragms.

We also can, depending on the length of the housing 1 and the requirements of each particular application, create many magnetic fields which can be very pawerful, suitably numbered,i.e. 7,9,11,19,27,29 and 2999.

In accordance to an illustrative embodiment of the invention the arrangement of the magnets is made with an alternate north(N) and south(S) pole, where the south pole (S) is preferred at the outlet. Alternatively,we may have a north (N) and south(S) to south(S) pole arrangement of the magnets, whereby at this last case the magnets are not attracted to each other but repulsed.

Finally, in accordance to the Laws of Numeration a total length of magnetic field is chosen for the most efficient operation of the device, where the value of this length either is or corresponds to a good number, such as for example:

13.3=7 or 13.5=9 or 14,2=7 or 14.4=9 or various multiples or submultiples of these numbers, so as to provide a device with a double, triple, etc. magnetic field.

The device works at a minimum pressure of 3.9 p.s.i.,

-14-

where this pressure leads the liquids to be disintegrated gradually via the steady (non-moving) magnetic field which is created as above mentioned, whereat these liquids are gradually disintegrated and they reach theoutlet of the device at a condition of high energy potential.

In relation to the application of the device in internal or external combustion engines, the invented device is placed at a horizontal, vertical or inclined arrangement between the pump feeding the combustion liquids and the carburettor in internal combustion engines or prefferably after the diesel pump in external combustion engines, where the device is filled with the supplied combustion liquids, which are disintegrated within the device and are fed for combustion at a state of high energy potential.

Research and tests carried out with the proposed device for the disintegration of liquids and stable compounds resulted to the fact that with the proposed device an economy of fuel up to 45% is obtainable.The device is installed,if not foreseen by the make of the engine, very easily within approximately 7 minutes.

The second part of the method for the improvement of combustion in internal or external combustion engines relates to an intervention in the combustion circle and in particular at the acceleration membrane, which is provided onto the carburettor next to the floater. An illustratibe form of the accelarati- on membrane is shown in Figure 4, where the acceleration membrane 9 is provided with a central metallic "dish" 10,which via a certain lever, when the accelerator is pressed, creates vibrations, where depending on the number of these vibrations a corresponding quantity of combustion liquids is fed via the venturi tube to the entrance manifold of the engine.  Thus, when the diameter of the so called "dish" is by way of example 2.5cm, a certain quantity of liquids is fed to the combustion cylinders, whereas if the diameter of the "dish" is increased to 2.7 or 2.9 or 2.999  less quantity of fossible liquids is fed into the combustion chamber, whereby the vibrations of the acceleration membrane 9 are respectively reduced.  The possible diameters of the so called "dish" correspond- in accordance to the principles of numeration-if  2.5=7, if2.7=9 and if2.999=29.

The desired increase of the diameter of the so called "dish", is in accordance to a preffered,illustrative embodiment of the invention, realised with the addition of a washer 11 with a thickness of 9 or 11 tenths of a mm and a diameter correspoponding to the diameter of the so called "dish" and the type of the carburettor.  In this way, the vibrations of the so called "dish" of the acceleration membrane are substantially reduced, and thereby the amount of fossible liquids fed into the combustion chamber is proportionately reduced.  Thus, the amount of petrol which is exhausted without being burnt is eliminated.  It must be noted that this non-burned amount of petrol often reaches a percentage of 25-30%, this resulting not only to an economy of fuel, but also to a better operation and therefore longer life time and less maintenance requirements of the engine itself, thus achieving a substantial reduction of the atmospheric pollution as well.

The up today used method for the adjustment of the quantity of fuel fed to the combustion chamber involves regulation of the spraying nipple of the carburettor and this leads to a reduction of the horsepower of the engine of the vehicle, this being avoided if the method of the present invention is employed whereby the non burned exhausted amount of fossible liquid is eliminated and in the same time, the engine horsepouer is in no way reduced independent of the revolutions at which it operates.

It must hereby be noted that the description of the present invention, was made by reference to illustrative examples, which do not in any way limit the invention. Thus, any change or amendment relating to the shape, size, form, materials and accessories used in the construction and assembly process, as long as they do not comprise a new inventive step, are to be considered as included in the scope and the aims of the present invention.

CLAIMS

1. Method for the disintegration of liquids and stable compounds, characterized by that liquids and/or stable compounds are supplied under pressure within an existing, steady magnetic field, which has been constructed at high precision, based on the laws of numeration, by means of which and due to the spectrum lines of said liquids and stable compounds, they obtain a high energy potential.

2. Method for the disintegration of liquids and stable compounds, in accordance with the above claim 1, characterized by that the minimum value of the said pressure is 3.9 p.s.i.

3. Method for the disintegration of liquids and stable compounds, in accordance with the above claim1, characterized by that the existing, steady magnetic field has a total length of 13.3 or 13.5 or 14.2 or 14.4 or 314 or 26.6 or 36 or any other suitable and in accordance with the principles of numeration value of length, as well as any multiples and submultiples of the same.

4. Device for the disintegration of liquids and stable compounds for effecting the method for the disintegration of liquids and stable compounds claimed in the above claims 1-3 , characterized by that its construction is of high accuracy and in accordance to the laws of numeration, where the said device comprises a housing in the interior of which, there is provided an arrangement of magnetic fields, where the magnetic fields are formed by a serial arrangement of magnets shaped in the form of the said housing, e.g. cylindrical magnets for a cylindrical housing, where the said magnets are intefaced by thin, annular diaphragms with a thickness of 2.999mm or any other suitable and in accordance with the principles of numeration value of thickeness, where the said housing comprises a first inlet portion whichfunctions as a storage space for the liquids and /or stable compounds fed for the disintegration process, and where following the said storage space a first magnet is provided, prior to the beginning of the said arrangement of magnetic fields. where the said magnet is mounted in place by means of a suitable spring which contacts the internal wall of the basis of the said housing.

5. Device for the disintegration of liquids and/or stable compounds, in accordance with the above claim 4, characterized by that the value of the distance at which the work produced within the said device is transferred before it is used, is in accordance to the principles of numeration, such as for example 64cm, 46cm or any other suitable balue of distance, in accordance to the principles of numeration and the other manufacturing characteristics of the said device.

6. Device for the disintegration of liquids and stable compounds in accordance with the above claim 4, characterized by that the said arrangement of magnetic fields generally comprises, following the said free storage space for the sup-

-3-

plied liquids a first magnet, an inlet diaphragm and an outlet diaphragm, where in between the said inlet and outlet diaphragms, there is provided a series of magnets, each of said magnets being seperated from the adjacent magnets via a diaphragm, corresponding to the said inlet and outlet diaphragms of the device, where each magnet has a thickness of 10.5 mm and an internal diameter of 27 mm or any other dimensions in accordance to the principles of numeration and the other manufacturing characteristics and requirements of the said device.

7. Device for the disintegration of liquids and stable compounds in accordance with claim 4, characterized by that the number of said magnets used for the formation of the said existing, steady magnetic field is 9,12,19,27 or other suitable and in accordance with the principles of numeration as well as the other manufacturing characteristics and requirements of the said device, number.

8. Device for the disintegration of liquids and stable compounds in accordance with the above claim 4, characterized by that the arrangement of the said magnets is made with an alternate north (N) and south (S) pole, with a south pole facing the inlet of the device.

9. Device for the disintegration of liquids and stable compounds in accordance with the above claim 4, characterized by that the arrangement of the said magnets is made so as a

-4-

south (S) pole faces a south (S) pole and a north (N) pole faces a north (N) pole.

10. Device for the disintegrationof liquids and stable compounds in accor dance with the above claim 4, characterized by that an anisotropic or a pair of isotropic magnets is mounted within the said housing, following the said outlet diaphragm, in order to provide reinforcement of the proposed existing and steady magnetic field.

11. Method for the improvement of combustion in internal or external combustion engines, charasterized by that it comprises passage of the supplied fossible liquids through the device for the disintergation of liquids and stable compounds claimed in above claims 4-10, where the said device is connected between the pump feeding the fossible liquids and the carburettor in the case of an internal combustion engineand prior or following the diesel pump in external combustion engines, where the supplied fossible liquids are disintegrated within the

said device and are fed to the combustion chamber at a state of high energy potential, whereby because of their such processing it is possible to reduce their quantity necessary for combustion and this is implemented with an increase of the acceleration membrane and therefore via a reduction of its vibrations and consequently of the amount of fossible liquids supplied, where this is achieved by the addition circumferentially of the "dish" of a washer with a thickness of 9 or 11 thenths of a mm "dish" of a washer with a thickness of 9 or 11 tenths of a mm and diameter corresponding to the diameter of the "dish" of the acceleration membrane and the type of the carburettor, where ، following the addition of the said washer, the total diameter of the "dish" becomes 2.7 or 2.9 or 2.999 or takes any other suitable value in accordance to the laws of numeration and the manufacturing requirements.

12. Method for the disintegration of liquids and stable compounds, device for implementing the method and its application in the improvement of combustion in internal or external combustion engines, in accordance with any of the above claims 1-11, as described in the attached specification and as illustrated in the accompanying drawings.

THE INVENTOR

IOANNIS VARELAS

fig. 2

fig. 1

0235070

fig 3

fig. 4